(19) Europäisches Patentamt
European Patent Office
Office européen des brevets

(11) EP 0 861 026 B1

(12) EUROPÄISCHE PATENTSCHRIFT

(45) Veröffentlichungstag und Bekanntmachung des Hinweises auf die Patenterteilung:
**02.04.2003 Patentblatt 2003/14**

(21) Anmeldenummer: **96932505.9**

(22) Anmeldetag: **12.09.1996**

(51) Int Cl.[7]: **A01N 35/10**, A01N 43/16, A01N 43/18, A01N 43/40, A01N 43/22, A01N 43/24, A01N 43/36, A01N 43/72, A01N 43/08, A01N 43/10 // (A01N43/18, 57:16, 47:36, 47:34, 47:12, 43:88, 43:78, 43:70, 43:56, 43:42, 43:40)

(86) Internationale Anmeldenummer:
**PCT/EP96/04000**

(87) Internationale Veröffentlichungsnummer:
**WO 97/010710 (27.03.1997 Gazette 1997/14)**

(54) **SYNERGISTISCHE HERBIZIDE MISCHUNGEN, ENTHALTEND CYCLOHEXENONOXIMETHER**

SYNERGISTIC HERBICIDAL MIXTURES CONTAINING CYCLOHEXENONE OXIME ETHER

MELANGES HERBICIDES SYNERGIQUES CONTENANT DES ETHERS D'OXIME DE CYCLOHEXENONE

(84) Benannte Vertragsstaaten:
**AT BE CH DE DK ES FI FR GB GR IE IT LI NL PT SE**
Benannte Erstreckungsstaaten:
**SI**

(30) Priorität: **20.09.1995 DE 19534848**

(43) Veröffentlichungstag der Anmeldung:
**02.09.1998 Patentblatt 1998/36**

(73) Patentinhaber: **BASF AKTIENGESELLSCHAFT**
**67056 Ludwigshafen (DE)**

(72) Erfinder:
- **SIEVERNICH, Bernd**
  **D-67459 Böhl-Iggelheim (DE)**
- **LANDES, Max**
  **D-67161 Gönnheim (DE)**
- **FINLEY, Charles**
  **Greenville, MS 38701 (US)**
- **WESTPHALEN, Karl-Otto**
  **D-67346 Speyer (DE)**
- **WALTER, Helmut**
  **D-67283 Obrigheim (DE)**
- **MISSLITZ, Ulf**
  **D-67433 Neustadt (DE)**

(56) Entgegenhaltungen:
**WO-A-93/04581** **DE-A- 4 014 986**
**DE-A- 4 222 261**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 861 026 B1

## Beschreibung

Die vorliegende Erfindung betrifft neue herbizide Mischungen, enthaltend

a) mindestens einen Cyclohexenonoximether der Formel I

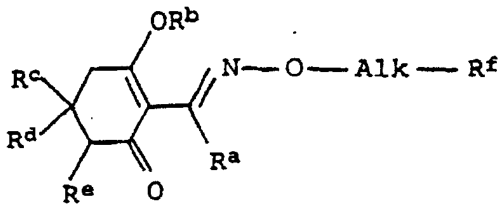

(I),

in der die Variablen folgende Bedeutungen haben:

$R^a$ Ethyl oder n-Propyl;

$R^b$, $R^d$ und $R^e$ jeweils Wasserstoff;

$R^c$ Tetrahydropyran-3-yl, Tetrahydropyran-4-yl oder Tetrahydrothiopyran-3-yl;

Alk eine Kette $-CH_2CH_2-O-$ oder $-CH_2CH(CH_3)-O-$;

$R^f$ 4-Fluorphenyl oder 4-Chlorphenyl

und

b) mindestens eine der folgenden 44 herbiziden Verbindungen aus den Gruppen b1) bis b20) :

b1) den Amiden
2-Brom-3,3-dimethyl-N-(1-methyl-1-phenylethyl)-butyramid (Common name: Bromobutide),
S-(1-Methyl-1-phenylethyl)-1-piperidincarbothioat (Common name: Dimepiperate),
4-Ethoxybenz-2',3'-dihydrochloranilid (Common name: Etobenzanid) und
N-(3,4-dichlorophenyl)-propanamid (Common name: Propanil);

b2) den Aniliden
S-[2-[(4-Chlorphenyl)(1-methylethyl)amino]-2-oxoethyl]-O,O-dimethylphosphordithioat (Common name: Anilofos) und 2-(1,3-Benzthiazol-2-yloxy)-N-methyl-acetanilid (Common name: Mefenacet);

b3) den Aryloxyalkancarbonsäuren
(2,4-Dichlorphenoxy)essigsäure (Common name: 2,4-D),
4-(4-Chlor-2-methylphenoxy)-butancarbonsäure (Common name: MCPB) und
2-(2-Naphthyloxy)-propionanilid (Common name: Napro-anilide);

b4) 3-Isopropyl-1H-2,1,3-benzothiadiazin-4-(3H)on-2,2-dioxid (Common name: Bentazon);

b5) den Bleachern
4-(2,4-Dichlorbenzoyl)-1,3-dimethyl-pyrazol-5-yl-toluyl-4-sulfonat (Common name: Pyrazolynate, Pyrazolate) und 2-(2-Chlor-4-mesylbenzoyl)-cyclohexan-1,3-dion (Common name: Sulcotrione);

b6) den Carbamaten
S-Benzyl-1,2-dimethylpropyl(ethyl)-thiocarbamat (Common name: Esprocarb),
N-(Ethylthio-carbonyl)-azepan (Common name: Molinate),
O-3-tert.-Butylphenyl-6-methoxy-2-pyridyl(methyl)thiocarbamat (Common name: Pyributicarb) und
N,N-Diethyl-carbaminsäure-4-chlorbenzylthioester (Common name: Thiobencarb, Benthiocarb);

b7) 3,7-Dichlorchinolin-8-carbonsäure (Common name: Quinclorac);

b8) den Chloracetaniliden
N-(Butoxymethyl)-2-chlor-N-(2,6-diethylphenyl)-acetamid (Common name: Butachlor),
(Z)-N-but-2-enyloxymethyl-2-chlor-2',6'-diethylacetanilid (Common name: Butenachlor),
N-(2-Propoxyethyl)-2-chlor-N-(2,6-diethylphenyl)acetamid (Common name: Pretilachlor) und
α-Chlor-N-(3-methoxy-2-thienyl) -methyl-2',6'-dimethylacetanilid (Common name: Thenylchlor);

b9) den Cyclohexenonen
2-[1-(Ethoxyimino)-butyl]-3-hydroxy-5-(tetrahydrothiopyran-3-yl)-2-cyclohexen-1-on (Common name: Cycloxydim) und
(E/Z)-2-[1-(Ethoxyimino)butyl]-5-[2-(ethylthio)-propyl]-3-hydroxy-cyclohex-2-enon (Common name: Sethoxydim);

b10) N-(1-Ethylpropyl)-3,4-dimethyl-2,6-dinitrobenzolamin (Common name: Pendimethalin);

b11) den Phenoxyphenoxypropionsäureestern
(R)-2-[4-(4-Cyano-2-fluorphenoxy)phenoxy]-propionsäure-nbutylester (Common name: Cyhalofop-butyl) und
2-[4-(6-Chlorbenzoxazol-2-yloxy)-phenoxy]-propionsäureethylester (Common name: Fenoxaprop-ethyl);

b12) den Protoporphyrinogen-IX-oxidase-Hemmern
2-[4-(2,4-Dichlor-m-toluyl)-1,3-dimethylpyrazol-5-yl-oxy]-4'-methylacetophenon (Common name: Benzofenap) und
2-[4-(2,4-Dichlorbenzoyl)-1,3-dimethyl-pyrazol-5-yloxy]-acetophenon (Common name: Pyrazoxyfen);

b13) 3,5-Bis(methylthio-carbonyl)-2-difluormethyl-4-(2-methylpropyl)-6-trifluormethyl-pyridin (Common name: Dithiopyr);

b14) den Pyrimidylethern
2,6-Bis[(4,6-dimethoxypyrimidin-2-yl)oxy]benzoesäure-Natriumsalz und
2-[(4,6-Dimethoxypyrimidin-2-yl)oxy]-6-[1-(methoxyimino)ethyl]benzoesäure-methylester;

b15) den Sulfonylharnstoffen
1-(4,6-Dimethoxypyrimidin-2-yl)-3-[1-methyl-4-(2-methyl-2H-tetrazol-5-yl)pyrazol-5-ylsulfonyl]harnstoff (Common name: Azimsulfuron),
α-(4,6-Dimethoxypyrimidin-2-yl-carbamoyl-sulfamoyl)-O-toluolsäure-methylester (Common name: Bensulfuronmethyl),
1-(4,6-Dimethoxy-1,3,5-triazin-2-yl)-3-[2-(2-methoxyethoxy)-phenylsulfonyl]-harnstoff (Common name: Cinosulfuron),
1-{[2-(Cyclopropylcarbonyl)phenyl]aminosulfonyl)-3-(4,6-dimethoxypyrimidin-2-yl)-harnstoff (Common name: Cyclosulfamuron),
[[(4,6-Dimethoxy-2-pyrimidinyl)amino]carbonyl]-2-ethoxyphenyl-sulfaminsäureester (Common name: Ethoxysulfuron),
N-(2-Chlorimidazo[1,2-a]pyridin-3-yl-sulfonyl)-N'-(4,6-dimethoxy-2-pyrimidyl) -harnstoff (Common name: Imazosulfuron) und
5-(4,6-Dimethoxypyrimidin-2-yl-carbamoylsulfamoyl)-1-methylpyrazol-4-carbonsäureethylester (Common name: Pyrazosulfuron-ethyl);

b16) den Triazinen
$N^2$-(1,2-Dimethylpropyl)-$N^4$-ethyl-6-methylthio-1,3,5-triazin-2,4-diamin (Common name: Dimethametryn) und
Bis(ethylamino)-6-methylthio-1,3,5-triazin (Common name: Simetryn, Simetryne);

b17) 2,3-Dihydro-3,3-dimethyl-5-benzofuranyl-ethansulfonat (Common name: Benfuresate);

b18) 1-Diethylcarbamoyl-3-(2,4,6-Trimethylphenylsulfonyl)-1,2,4-triazol (Common name: Cafenstrole);

b19) (1RS,2SR,4SR)-1,4-Epoxy-p-menth-2-yl-2-methylbenzylether (Common name: Cinmethylin), sowie

b20) S-2-Methylpiperidinocarbonylmethyl-O,O-dipropylphosphorodithioat (Common name: Piperophos).

Außerdem betrifft die Erfindung herbizide Mittel, enthaltend mindestens einen flüssigen und/oder festen Trägerstoff, gewünschtenfalls mindestens ein Adjuvant, sowie

a) eine herbizid wirksame Menge mindestens eines Cyclohexenonoximethers der Formel I und

b) eine synergistisch wirksame Menge mindestens einer herbiziden Verbindung aus der Gruppe b).

Des weiteren betrifft die Erfindung Verfahren zur Herstellung dieser Mittel und Verfahren zur Bekämpfung von unerwünschtem Pflanzenwuchs.

Bei Pflanzenschutzmitteln ist es grundsätzlich wünschenswert, die spezifische Wirkung eines Wirkstoffs und die Wirkungssicherheit zu verbessern. Die herbizid wirksamen Cyclohexenonoximether I sind in der Regel gut geeignet, um monokotyle Schadpflanzen in Kulturen zu bekämpfen.

Aufgabe der Erfindung war es nun, die selektive herbizide Wirkung der Cyclohexenonoximether I gegen unerwünschte Schadpflanzen zu erhöhen.

Demgemäß wurden die Eingangs definierten synergistischen Mischungen gefunden. Des weiteren wurden herbizide Mittel gefunden, die diese Mischungen enthalten, sowie Verfahren zu deren Herstellung und Verfahren zur Bekämpfung von unerwünschtem Pflanzenwuchs mit den Cyclohexenonoximethern I und den herbizid wirksamen Verbindungen der Gruppe b), wobei es unerheblich ist, ob letztere und die Cyclohexenonoximether I gemeinsam oder getrennt formuliert und ausgebracht werden und in welcher Reihenfolge die Applikation bei getrennter Ausbringung erfolgt.

Die erfindungsgemäßen Mischungen zeigen eine überadditive synergistische Wirkung; die Verträglichkeit der Einzelverbindungen a) oder b) für bestimmte Kulturpflanzen bleibt dabei im allgemeinen erhalten.

Die Cyclohexenonoximether der Formel I sind z.B. aus der EP-A 368 227, DE-A 40 14 983, DE-A 40 14 984, U.S. 5,228,896, DE-A 40 14 986 und DE-A 40 14 988 bekannt.

Die herbizid wirksamen Verbindungen aus der Gruppe b) sind z.B. in

- "Herbizide", Hock, Fedtke, Schmidt, Georg Thieme Verlag, 1. Auflage 1995 (s. "Quinclorac" S. 238, "Molinat" S. 32, "Butachlor" S. 32, "Pretilachlor" S. 32, "Dithiopyr" S. 32, "Mefenacet" S. 32, "Fenoxapropethyl" S. 216, "Dimepiperate" S. 32, "Pyrazolate" S. 146, "Pyrazoxyfen" S. 146, "Bensulfuron-methyl" S. 31, "Pyrazosulfuron-ethyl" S. 3.1, "Cinosulfuron" S. 31, "Benfuresate" S. 233, "Bromobutide" S. 243, "Dimethametryn" S. 118, "Esprocarb" S. 229, "Pyributicarb" S. 32, "Cinmethylin" S. 32, "Propanil" S. 32, "2,4-D" S. 30, "Bentazon" S. 30, "Azimsulfuron" S. 175),

- "Agricultural Chemicals", Book II Herbicides, 1993 (s. "Thio bencarb" S. 85, "Benzofenap" S. 221, "Napropanilid" S. 49, "Piperophos" S. 102, "Anilofos" S. 241, "Imazosulfuron" S. 150, "Etobenzanid" S. 54, "Sulcotrione" S. 268, "Sethoxydim" S. 253, "Cycloxydim" S. 222) oder

- "Short Review of Herbicides & PGRs 1991, Hodogaya Chemical (s. "Butenachlor" S. 52, "Thenylchlor" S. 52, 3-(2-Chlorphenylmethyl)-1-(1-methyl-1-phenylethyl)-harnstoff S. 90, "Pendimethalin" S. 58)

beschrieben.

Weitere Verbindungen der Gruppe b) sind der Publikation "Brighton Crop Protection Conference - Weeds - 1993 {s. "Cyclosulfamuron S. 41, 2-[(4,6-Dimethoxypyrimidin-2-yl)oxy]-6-[1-(methoxyimino)-ethyl]benzoesäure-methylester S. 47, 2,6-Bis[(4,6-dimethoxypyrimidin-2-yl)oxy]benzoesäure-Natriumsalz S. 61} zu entnehmen.

Bezüglich (R) -2- [4- (4-Cyano-2-fluorphenoxy) phenoxy] -propionsäuren-butylester sei auf die EP-A 0 302 203 verwiesen, bezüglich 1-Diethylcarbamoyl-3-(2,4,6-trimethylphenylsulfonyl)-1,2,4-triazol auf die EP-A 0 332 133.

Als Wirkstoffe a) kommen sowohl die reinen Enantiomeren als auch die Racemate oder Diastereomerengemische der Cyclohexenonoximether I in Betracht.

Als besonders vorteilhaft haben sich bisher die Cyclohexenonoximether I der folgenden Tabelle 1 erwiesen:

Tabelle 1

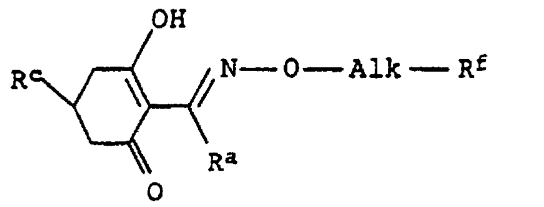

I {$R^b$, $R^d$, $R^e$ = H}

| Nr. | $R^a$ | $R^c$ | Alk | $R^f$ |
|---|---|---|---|---|
| 1 | $C_2H_5$ | Tetrahydrothiopyran-3-yl | $-(CH_2)_2-O-$ | 4-Cl-phenyl |
| 2 | n-$C_3H_7$ | Tetrahydrothiopyran-3-yl | $-(CH_2)_2-O-$ | 4-Cl-phenyl |
| 3 | $C_2H_5$ | Tetrahydropyran-3-yl | $-(CH_2)_2-O-$ | 4-Cl-phenyl |
| 4 | n-$C_3H_7$ | Tetrahydropyran-3-yl | $-(CH_2)_2-O-$ | 4-Cl-phenyl |
| 5 | $C_2H_5$ | Tetrahydrothiopyran-3-yl | $-(CH_2)_2-O-$ | 4-F-phenyl |
| 6 | n-$C_3H_7$ | Tetrahydrothiopyran-3-yl | $-(CH_2)_2-O-$ | 4-F-phenyl |
| 7 | $C_2H_5$ | Tetrahydropyran-3-yl | $-(CH_2)_2-O-$ | 4-F-phenyl |
| 8 | n-$C_3H_7$ | Tetrahydropyran-3-yl | $-(CH_2)_2-O-$ | 4-F-phenyl |
| 9 | $C_2H_5$ | Tetrahydrothiopyran-4-yl | $-(CH_2)_2-O-$ | 4-Cl-phenyl |
| 10 | n-$C_3H_7$ | Tetrahydrothiopyran-4-yl | $-(CH_2)_2-O-$ | 4-Cl-phenyl |
| 11 | $C_2H_5$ | Tetrahydropyran-4-yl | $-(CH_2)_2-O-$ | 4-Cl-phenyl |
| 12 | n-$C_3H_7$ | Tetrahydropyran-4-yl | $-(CH_2)_2-O-$ | 4-Cl-phenyl |
| 13 | $C_2H_5$ | Tetrahydrothiopyran-4-yl | $-(CH_2)_2-O-$ | 4-F-phenyl |
| 14 | n-$C_3H_7$ | Tetrahydrothiopyran-4-yl | $-(CH_2)_2-O-$ | 4-F-phenyl |
| 15 | $C_2H_5$ | Tetrahydropyran-4-yl | $-(CH_2)_2-O-$ | 4-F-phenyl |
| 16 | n-$C_3H_7$ | Tetrahydropyran-4-yl | $-(CH_2)_2-O-$ | 4-F-phenyl |
| 17 | $C_2H_5$ | Tetrahydrothiopyran-3-yl | $-CH_2CH(CH_3)-O-$ | 4-Cl-phenyl |
| 18 | n-$C_3H_7$ | Tetrahydrothiopyran-3-yl | $-CH_2CH(CH_3)-O-$ | 4-Cl-phenyl |
| 19 | $C_2H_5$ | Tetrahydropyran-3-yl | $-CH_2CH(CH_3)-O-$ | 4-Cl-phenyl |
| 20 | n-$C_3H_7$ | Tetrahydropyran-3-yl | $-CH_2CH(CH_3)-O-$ | 4-Cl-phenyl |
| 21 | $C_2H_5$ | Tetrahydrothiopyran-3-yl | $-CH_2CH(CH_3)-O-$ | 4-F-phenyl |
| 22 | n-$C_3H_7$ | Tetrahydrothiopyran-3-yl | $-CH_2CH(CH_3)-O-$ | 4-F-phenyl |
| 23 | $C_2H_5$ | Tetrahydropyran-3-yl | $-CH_2CH(CH_3)-O-$ | 4-F-phenyl |
| 24 | n-$C_3H_7$ | Tetrahydropyran-3-yl | $-CH_2CH(CH_3)-O-$ | 4-F-phenyl |

| Nr. | $R^a$ | $R^c$ | Alk | $R^f$ |
|---|---|---|---|---|
| 25 | $C_2H_5$ | Tetrahydrothiopyran-4-yl | $-CH_2CH(CH_3)-O-$ | 4-Cl-phenyl |
| 26 | $n-C_3H_7$ | Tetrahydrothiopyran-4-yl | $-CH_2CH(CH_3)-O-$ | 4-Cl-phenyl |
| 27 | $C_2H_5$ | Tetrahydropyran-4-yl | $-CH_2CH(CH_3)-O-$ | 4-Cl-phenyl |
| 28 | $n-C_3H_7$ | Tetrahydropyran-4-yl | $-CH_2CH(CH_3)-O-$ | 4-Cl-phenyl |
| 29 | $C_2H_5$ | Tetrahydrothiopyran-4-yl | $-CH_2CH(CH_3)-O-$ | 4-F-phenyl |
| 30 | $n-C_3H_7$ | Tetrahydrothiopyran-4-yl | $-CH_2CH(CH_3)-O-$ | 4-F-phenyl |
| 31 | $C_2H_5$ | Tetrahydropyran-4-yl | $-CH_2CH(CH_3)-O-$ | 4-F-phenyl |
| 32 | $n-C_3H_7$ | Tetrahydropyran-4-yl | $-CH_2CH(CH_3)-O-$ | 4-F-phenyl |

Unter den Herbiziden der Gruppe b) sind die folgenden 33 besonders bevorzugt:

b1) die Amide
2-Brom-3,3-dimethyl-N-(1-methyl-1-phenylethyl)-butyramid (Common name: bromobutide), *S*-(1-Methyl-1-phenylethyl)-1-piperidincarbothioat (Common name: Dimepiperate),
4-Ethoxybenz-2',3'-dihydrochloranilid (Common name: Etobenzanid) und
N-(3,4-dichlorophenyl)-propanamid (Common name: Propanil);

b2) 2-(1,3-Benzthiazol-2-yloxy)-N-methyl-acetanilid (Common name: Mefenacet);

b3) die Aryloxyalkancarbonsauren
(2,4-Dichlorphenoxy)essigsäure (Common name: 2,4-D),
4- (4-Chlor-2-methylphenoxy)-butancarbonsäure (Common name: MCPB) und 2-(2-Naphthyloxy)-propionanilid (Common name: Naproanilide);

b4) 3-Isopropyl-1H-2,1,3-benzothiadiazin-4-(3H)on-2,2-dioxid (Common name: Bentazon);

b5) die Bleacher
4-(2,4-Dichlorbenzoyl)-1,3-dimethyl-pyrazol-5-yl-toluyl-4-sulfonat (Common name: Pyrazolynate, Pyrazolate) und
2-(2-Chlor-4-mesylbenzoyl)-cyclohexan-1,3-dion (Common name: Sulcotrione),

b6) die Carbamate
S-Benzyl-1,2-dimethylpropyl(ethyl)-thiocarbamat (Common name: Esprocarb),
N-(Ethylthio-carbonyl)-asepan (Common name: Molinate) und
N,N-Diethyl-carbaminsäure-4-chlorbenzylthioester (Common name: Thiobencarb),

b7) 3,7-Dichlorchinolin-8-carbonsäure (Common name: Quinclorac);

b8) die Chloracetanilide
N-(Butoxymethyl)-2-chlor-N-(2,6-diethylphenyl)-acetamid (Common name: Butachlor),
(Z)-N-but-2-enyloxymethyl-2-chlor-2' ,6'-diethylacetanilid (Common name: Butenachlor),
N-(2-Propoxyethyl)-2-chlor-N-(2,6-diethylphenyl)acetamid (Common name: Pretilachlor) und
$\alpha$-Chlor-N-(3-methoxy-2-thienyl)-methyl-2',6'-dimethylacetanilid (Common name: Thenylchlor);

b11) 2-[4-(6-Chlorbenzoxazol-2-yloxy)-phenoxy]-propionsäure-ethylester (Common name: Fenoxapropethyl);

b12) die Protoporphyrinogen-IX-oxidase-Hemmer
2-[4-(2,4-Dichlor-m-toluyl)-1,3-dimethylpyrazol-5-yloxy]-4'methylacetophenon (Common name: Benzofenap) und

2-[4-(2,4-Dichlorbenzoyl)-1,3-dimethyl-pyrazol-5-yloxy]-acetophenon (Common name: Pyrazoxyfen);

b13) 3,5-Bis(methylthio-carbonyl)-2-difluormethyl-4-(2-methylpropyl)-6-trifluormethyl-pyridin (Common name: Dithiopyr);

b15) die Sulfonylharnstoffe
1-(4,6-Dimethoxypyrimidin-2-yl)-3- [1-methyl-4-(2-methyl-2Htetrazol-5-yl)pyrazol-5-ylsulfonyll-harnstoff (Common name: Azimsulfuron),
α-(4,6-Dimethoxypyrimidin-2-yl-carbamoyl-sulfamoyl)-Otoluolsäure-methylester (Common name: Bensulfuron-methyl), 1- (4,6-Dimethoxy-1,3,5-triazin-2-yl) -3- [2-(2-methoxyethoxy)-phenylsulfonyl]-harnstoff (Common name: Cinosulfuron), 1-{[2-(Cyclopropylcarbonyl)phenyl]aminosulfonyl}-3-(4,6-dimethoxypyrimidin-2-yl)harnstoff (Common name: Cyclosulfamuron), N-(2-Chlorimidazo[1,2-a]-pyridin-3-yl-sulfonyl) -N' - (4,6-dimethoxy-2-pyrimidyl)-harnstoff (Common name: Imazosulfuron) und
5-(4,6-Dimethoxypyrimidin-2-yl-carbamoylsulfamoyl)-1-methylpyrazol-4-carbonsäureethylester (Common name: Pyrazosulfuron-ethyl),

b16) die Triazine
$N^2$-(1,2-Dimethylpropyl)-$N^4$-ethyl-6-methylthio-1,3,5-triazin-2,4-diamin (Common name: Dimethametryn) und Bis(ethylamino)-6-methylthio-1,3,5-triazin (Common name: Simetryn, Simetryne);

b19) (1RS,2SR,4SR)-1,4-Epoxy-p-menth-2-yl-2-methylbenzylether (Common name: Cinmethylin), sowie

b20) S-2-Methylpiperidinocarbonylmethyl-O,O-dipropyl-phosphorodithioat (Common name: Piperophos).

Die erfindungsgemäßen Mischungen, oder bei getrennter Ausbringung die Komponente a) oder b), können in der Kultur *Reis,* Weizen, Mais, Gerste oder Hirse Unkräuter und Schadgräser sehr gut bekämpfen, ohne die Kulturpflanze nennenswert zu schädigen. Dieser Effekt tritt vor allem bei niedrigen Aufwandmengen auf.

Unter Berücksichtigung der Vielseitigkeit der Applikationsmethode können die erfindungsgemäßen Mittel noch in einer weiteren Zahl von Kulturpflanzen zur Beseitigung unerwünschter Pflanzen eingesetzt werden. In Betracht kommen beispielsweise folgende Kulturen:

Allium cepa, Ananas comosus, Arachis hypogaea, Asparagus officinalis, Beta vulgaris spec. altissima, Beta vulagris spec. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Ficus elastica, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, i Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa, Phaseolus lunatus, Phaseolus vulgaris, Picea abies, Pinus spec., Pisum sativum, Prunus avium, Prunus persica, Pyrus communis. Ribes sylestre, Ricinus communis, Saccharum officinarum, Secale cereale, Solanum tuberosum, Sorghum bicolor (s. vulgare), Theobroma cacao, Trifolium pratense. Triticum aestivum, Triticum durum, Vicia faba, Vitis vinifera, Zea mays.

Darüber hinaus können die erfindungsgemäßen Mischungen auch in Kulturen, die durch Züchtung einschließlich gentechnischer Methoden gegen die Wirkung von Herbiziden tolerant sind, verwandt werden.

Die Applikation der erfindungsgemäßen Mischungen bzw. deren Aufbereitung kann im Vorauflauf- oder im Nachauflaufverfahren erfolgen. Sind die Wirkstoffe für gewisse Kulturpflanzen weniger verträglich, so können Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die Aufbereitungen der Mischungen werden den Pflanzen vornehmlich durch Blattspritzung zugeführt. Dabei kann die Ausbringung z.B. mit Wasser als Trägerstoff durch übliche Spritztechniken mit Spritzbrühenmengen von etwa 100 bis 1000 l/ha erfolgen. Eine Anwendung der Mittel im sogenannten "Low Volume"- oder "Ultralow-Volume"-Verfahren ist ebenso möglich wie ihre Applikation in Form von Granulaten.

Die Komponenten a) (Cyclohexenonoximether I) und b) können gemeinsam oder getrennt nach dem Auflaufen der Pflanzen auf die Blätter und Sprosse ausgebracht werden. Bevorzugt werden hierbei die Komponenten a) und

b) gleichzeitig ausgebracht. Es ist aber auch möglich, beide Komponenten getrennt auf das Feld zu bringen.

In der anwendungsfertigen Zubereitung können die Komponenten a) und b) in suspendierter, emulgierter oder gelöster Form gemeinsam oder getrennt formuliert vorliegen. Die Anwendungsformen richten sich dabei ganz nach den Verwendungszwecken.

Die erfindungsgemäßen Mittel können beispielsweise in Form von direkt versprühbaren wäßrigen Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feinste Verteilung der erfindungsgemäßen Wirkstoffe gewährleisten.

Als inerte Zusatzstoffe kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Paraffin, Tetrahydronaphthalin, alkylierte Naphthaline oder deren Derivate, alkylierte Benzole oder deren Derivate, Methanol, Ethanol, Propanol, Butanol, Cyclohexanol, Cyclohexanon oder stark polare Lösungsmittel, wie N-Methylpyrrolidon oder Wasser in Betracht.

Wäßrige Anwendungsformen können aus Emulsionskonzentraten, Suspensionen, Pasten, netzbaren Pulvern oder wasserdispergierbaren Granulaten durch Zusatz von Wasser bereitet werden. Zur Herstellung von Emulsionen, Pasten oder Öldispersionen können die Substrate als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe (Adjuvantien) kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether oder Polyoxypropylenalkylether, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die anwendungsfertigen Formulierungen enthalten im allgemeinen 0.001 bis 98 Gew.-%, vorzugsweise 0,01 bis 95 Gew.-%, an Wirkstoffen.

Allgemein werden dabei Komponente a) (Cyclohexenonoximether I) und Komponente b) in solchen Gewichtsanteilen angewendet, daß der gewünschte synergistische Effekt auftritt. Vorzugsweise liegen die Mischungsverhältnisse a) : b) bei 1:0,1 bis 1:40, insbesondere bei 1:0,2 bis 1:30, besonders bevorzugt bei 1:0,3 bis 1:15.

Die Aufwandmengen an reiner wirkstoffmischung, d.h. a) und b) ohne Formulierungshilfsmittel, betragen je nach Bekämpfungsziel, Jahreszeit, Zielpflanzen und Wachstumsstadium 0,01 bis 5 kg/ha, vorzugsweise 0,1 bis 3,0 kg/ha aktive Substanz (a. S.).

Außerdem kann es von Nutzen sein, die erfindungsgemäßen Mittel auch noch mit weiteren Pflanzenschutzmitteln gemischt, gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen. welche zur Behebung von Ernährungs- und Spurenelementmängeln eingesetzt werden. Es können auch nichtphytotoxische Öle und Ölkonzentrate zugesetzt werden.

Anwendungsbeispiele

Der Einfluß verschiedener Vertreter der erfindungsgemäßen herbiziden Mischungen - bzw. Kombinationen bestehend aus a) und b) - auf das wachstum von unerwünschten Pflanzen und Kulturpflanzen im Vergleich zum herbiziden Wirkstoff a) allein geht aus den folgenden Testergebnissen hervor:

Die Applikation der Herbizidmischungen erfolgte im Nachauflaufverfahren (Blattbehandlung), wobei die Cyclohexenonoximether I als Emulsionskonzentrat (EC) mit 100 oder 200 g/l Wirkstoff und die Herbizide der Komponente

b) in der Formulierung, in der sie als Handelsprodukt vorliegen, ausgebracht wurden.

Die Versuche erfolgten im Freiland auf Kleinparzellen mit sandigem Lehm (pH-Wert 6,2 bis 7,0) oder sandigem Ton (pH-Wert 5,0 bis 6,7) als Boden.

| Liste der Testpflanzen: | |
|---|---|
| Lateinischer Name | Englischer/US-Name |
| Brachiaria plantaginea | marmeladegrass, Alexandergrass |
| Cyperus iria | flatsedge, rice |
| Ischaemum rugosum | winklegrass, saromaccagrass |

Die Unkräuter hatten unterschiedliche Größen und Entwicklungsstadien; die durchschnittliche Höhe betrug je nach Wuchsform 5 bis 20 cm.

Die Mittel wurden gemeinsam oder nacheinander - entweder als Tankmischung oder als Fertigformulierung - ausgebracht, und zwar in Form von Emulsionen, wäßrigen Lösungen oder Suspensionen. Als Verteilungsmittel diente Wasser (350 1/ha). Die Ausbringung erfolgte mit Hilfe einer fahrbaren Parzellenspritzmaschine.

Die Versuchsperiode erstreckte sich über 3 bis 8 Wochen; die Bestände wurden aber auch noch zu späteren Zeiten beobachtet.

Die Schädigung durch die synergistischen Mischungen wurde anhand einer Skala von 0 % bis 100 % im Vergleich zu unbehandelten Kontrollparzellen bewertet. Dabei bedeutet 0 keine Schädigung und 100 die völlige Zerstörung der Pflanzen.

In den folgenden Beispielen wird die Wirkung der erfindungsgemäßen Mischungen gezeigt, ohne jedoch die Möglichkeit weiterer Anwendungen auszuschließen.

Bei diesen Beispielen wurde nach der Methode von S. R. Colby {vgl. "Calculating synergistic and antagonistic responses of herbicide combinations", Weeds 15, S. 20 ff (1967)} derjenige Wert E errechnet, der bei einer nur additiven Wirkung der Einzelwirkstoffe zu erwarten ist:

$$E = X + Y - \frac{XY}{100}$$

X = Prozentsatz der herbiziden Wirkung von Komponente a) bei einer Aufwandmenge $\alpha$
Y = Prozentsatz der herbiziden Wirkung von Komponente b) bei einer Aufwandmenge $\beta$
E = erwartete Wirkung (in %) von a) + b) bei einer Aufwandmenge $\alpha + \beta$

Ist der beobachtete Wert höher als der nach Colby errechnete Wert E, so liegt eine synergistische Wirkung vor.

Die erfindungsgemäßen Mischungen aus a) und b) haben eine höhere herbizide Wirkung, als nach Colby auf Grund der beobachteten Wirkungen der Einzelkomponenten bei alleiniger Anwendung zu erwarten wäre.

Die Ergebnisse der Tests sind den folgenden Tabellen 2 bis 4 zu entnehmen:

Tabelle 2

Herbizide Wirkung von Cyclohexenonoximether Nr. 18 und "Basagran" auf Cyperus iria im Freiland; Nachauflaufanwendung

| Aufwandmenge [kg/ha a.S.] | | Schädigung [%] | Erwartungswert E |
|---|---|---|---|
| Nr. 18 | Basagran | | |
| 0,1 | ---- | 13 | ----- |
| --- | 1,12 | 45 | ----- |
| 0,1 | 1,12 | 99 | 52,15 |

Tabelle 3

| Herbizide Wirkung von Cyclohexenonoximether Nr. 18 und "Quinclorac" auf Isachaemum rugosum im Freiland; Nachauflaufanwendung | | | |
|---|---|---|---|
| Aufwandmenge [kg/ha a.S.] | | Schädigung [%] | Erwartungswert E |
| Nr. 18 | Quinclorac | | |
| 0,15 | ----- | 92 | ----- |
| ---- | 0,375 | 3 | ----- |
| 0,15 | 0,375 | 99 | 92,24 |

Tabelle 4

| Herbizide Wirkung von Cyclohexenonoximether Nr. 18 und "Quinclorac" auf Brachiaria plantaginea im Freiland; Nachauflaufanwendung | | | |
|---|---|---|---|
| Aufwandmenge [kg/ha a.S.] | | Schädigung [%] | Erwartungswert E |
| Nr. 18 | Quinclorac | | |
| 0,075 | ---- | 85 | -- |
| ----- | 0,25 | 2 | -- |
| 0,075 | 0,25 | 98 | 79 |

**Patentansprüche**

**1.** Herbizide Mischung, enthaltend

a) mindestens einen Cyclohexenonoximether der Formel I

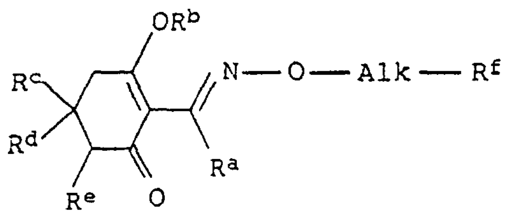 (I),

in der die Variablen folgende Bedeutungen haben:

$R^a$ Ethyl oder n-Propyl;

$R^b$, $R^d$ und $R^e$ jeweils wasserstoff;

$R^c$ Tetrahydropyran-3-yl, Tetrahydropyran-4-yl oder Tetrahydrothiopyran-3-yl;

Alk eine Kette $-CH_2CH_2-O-$ oder $-CH_2CH(CH_3)-O-$;

$R^f$ 4-Fluorphenyl oder 4-Chlorphenyl.

und

b) mindestens eine der folgenden 44 herbiziden Verbindungen aus den Gruppen b1 bis b20)

b1) den Amiden
2-Brom-3,3-dimethyl-N-(1-methyl-1-phenylethyl)-butyramid (Common name: Bromobutide), S-(1-Methyl-1-phenylethyl)-1-piperidincarbothioat (Common name: Dimepiperate), 4-Ethoxybenz-2',3'-dihydrochloranilid (Common name: Etobenzanid) und N-(3,4-dichlorophenyl)-propanamid (Common name: Propanil);

b2) den Aniliden
S-[2-[(4-Chlorophenyl)(1-methylethyl)amino]-2-oxo-ethyl]-O,O-dimethylphosphordithioat (Common name: Anilofos) und 2-(1,3-Benzthiazol-2-yloxy)-N-methyl-acetanilid, (Common name: Mefenacet);

b3) den Aryloxyalkancarbonsäuren
(2,4-Dichlorphenoxy)essigsäure (Common name: 2,4-D), 4- (4-Chlor-2-methylphenoxy)-butancarbonsäure (Common name: MCPB) und 2-(2-Naphthyloxy)-propionanilid (Common name: Napro-anilide);

b4) 3-Isopropyl-1H-2,1,3-benzothiadiazin-4-(3H)on-2,2-dioxid (Common name: Bentazon);

b5) den Bleachern
4-(2,4-Dichlorbenzoyl)-1,3-dimethyl-pyrazol-5-yltoluyl-4-sulfonat (Common name: Pyrazolynate, Pyrazolate) und 2-(2-Chlor-4-mesylbenzoyl)-cyclohexan-1,3-dion (Common name: Sulcotrione);

b6) den Carbamaten
S-Benzyl-1,2-dimethylpropyl(ethyl)-thiocarbamat (Common name: Esprocarb), N-(Ethylthio-carbonyl)-azepan (Common name: Molinate), O-3-tert.-Butylphenyl-6-methoxy-2-pyridyl (methyl)thiocarbamat (Common name: Pyributicarb) und N,N-Diethyl-carbaminsäure-4-chlorbenzylthioester (Common name: Thiobencarb, Benthiocarb);

b7) 3,7-Dichlorchinolin-8-carbonsäure (Common name: Quinclorac);

b8) den Chloracetaniliden
N-(Butoxymethyl)-2-chlor-N-(2,6-diethylphenyl)-acetamid (Common name: Butachlor), (Z)-N-But-2-enyloxymethyl-2-chlor-2',6'-diethylacetanilid (Common name: Butenachlor), N-(2-Propoxyethyl)-2-chlor-N-(2,6-diethylphenyl)acetamid (Common name: Pretilachlor) und $\alpha$-Chlor-N-(3-(methoxy-2-thienyl)-methyl-2',6'dimethylacetanilid (Common name: Thenylchlor);

b9) den Cyclohexenonen
2-[1-(Ethoxyimino)-butyl]-3-hydroxy-5-(tetrahydrothiopyran-3-yl)-2-cyclohexen-1-on (Common name: Cycloxydim) und (E/Z)-2-[1-(Ethoxyimino)butyl]-5-[2-(ethylthio)-propyl] -3-hydroxy-cyclohex-2-enon (Common name: Sethoxydim);

b10) N-(1-Ethylpropyl)-3,4-dimethyl-2,6-dinitrobenzolamin (Common name: Pendimethalin);

b11) den Phenoxyphenoxypropionsäureestern
(R)-2-[4-(4-Cyano-2-fluorphenoxy)phenoxy]-propionsäure-n-butylester (Common name: Cyhalofop-butyl) und 2-[4-(6-Chlorbenzoxazol-2-yloxy)-phenoxy]-propionsäure-ethylester (Common name: Fenoxaprop-ethyl);

b12) den Protoporphyrinogen-IX-oxidase-Hemmern
2-[4-(2,4-Dichlor-m-toluyl)-1,3-dimethylpyrazol-5-yloxy]-4'-methylacetophenon (Common name: Benzofenap) und 2-[4-(2,4-Dichlorbenzoyl)-1,3-dimethyl-pyrazol-5-yloxy]-acetophenon (Common name: Pyrazoxyfen);

b13) 3,5-Bis(methylthio-carbonyl)-2-difluormethyl-4-(2-methylpropyl)-6-trifluormethyl-pyridin (Common name: Dithiopyr);

b14) den Pyrimidylethern
2,6-Bis[(4,6-dimethoxypyrimidin-2-yl)oxy]benzoesäure-Natriumsalz und
2-[(4,6-Dimethoxypyrimidin-2-yl)oxy]-6-[1-(methoxyimino)ethyl]benzoesäure-methylester;

b15) den Sulfonylharnstoffen
1-(4,6-Dimethoxypyrimidin-2-yl)-3-[1-methyl-4-(2-methyl-2H-tetrazol-5-yl)pyrazol-5-ylsulfonyl]harnstoff (Common name: Azimsulfuron),
α-(4,6-Dimethoxypyrimidin-2-yl-carbamoyl-sulfamoyl)-O-toluolsäure-methylester (Common name: Bensulfuronmethyl),
1-(4,6-Dimethoxy-1,3,5-triazin-2-yl)-3-[2-(2-methoxyethoxy)-phenylsulfonyl]-harnstoff (Common name: Cinosulfuron),
1-{[2-(Cyclopropylcarbonyl)phenyl]aminosulfonyl}-3-(4,6-dimethoxypyrimidin-2-yl)-harnstoff (Common name: Cyclosulfamuron).
([(4,6-Dimethoxy-2-pyrimidinyl)amino]carbonyl]-2-ethoxyphenyl-sulfaminsäureester (Common name: Ethoxysulfuron),
N-[2-Chlorimidazo[1,2-a]pyridin-3-yl-sulfonyl)-N'-(4,6-dimethoxy-2-pyrimidyl)-harnstoff (Common name: Imazosulfuron) und
5-(4,6-Dimethoxypyrimidin-2-yl-carbamoylsulfamoyl)-1-methylpyrazol-4-carbonsäureethylester (Common name: Pyrazosulfuron-ethyl);

b16) den Triazinen
$N^2$-(1,2-Dimethylpropyl)-$N^4$-ethyl-6-methylthio-1,3,5-triazin-2,4-diamin (Common name: Dimethametryn) und
Bis(ethylamino)-6-methylthio-1,3,5-triazin (Common name: Simetryn, Simetryne);

b17) 2,3-Dihydro-3,3-dimethyl-5-benzofuranyl-ethansulfonat (Common name: Benfuresate);

b18) 1-Diethylcarbamoyl-3-(2,4,6-Trimethylphenylsulfonyl)-1,2,4-triazol (Common name: Cafenstrole);

b19) (1RS,2SR,4SR)-1,4-Epoxy-p-menth-2-yl-2-methylbenzylether (Common name: Cinmethylin), sowie

b20) S-2-Methylpiperidinocarbonylmethyl-0,0-dipropylphosphorodithioat (Common name: Piperophos).

**2.** Herbizide Mischung nach Anspruch 1, enthaltend als Komponente b) mindestens eines der folgenden 33 Herbizide:

b1) 2-Brom-3,3-dimethyl-N-(1-methyl-1-phenylethyl)-butyramid (Common name: bromobutide), S-(1-Methyl-1-phenylethyl)-1-piperidincarbothioat (Common name: Dimepiperate), 4-Ethoxybenz-2',3'-dihydrochloranilid (Common name: Etobenzanid),
N-(3,4-dichlorophenyl)-propanamid (Common name: Propanil);

b2) 2-(1,3-Benzthiazol-2-yloxy)-N-methyl-acetanilid (Common name: Mefenacet);

b3) (2,4-Dichlorphenoxy)essigsäure (Common name: 2,4-D), 4-(4-Chlor-2-methylphenoxy)-butancarbonsäure (Common name: MCPB), 2-(2-Naphthyloxy)-propionanilid (Common name: Naproanilide);

b4) 3-Isopropyl-1H-2,1,3-benzothiadiazin-4-(3H)one-2,2-dioxid (Common name: Bentazon);

b5) 4-(2,4-Dichlorbenzoyl)-1,3-dimethyl-pyrazol-5-yl-toluyl-4-sulfonat (Common name: Pyrazolynate, Pyrazolate), 2-(2-Chlor-4-mesylbenzoyl)-cyclohexan-1,3-dion (Common name: Sulcotrione),

b6) S-Benzyl-1,2-dimethylpropyl(ethyl)-thiocarbamat (Common name: Esprocarb),
N-(Ethylthio-carbonyl)-azepan (Common name: Molinace), N,N-Diethyl-carbaminsäure-4-chlorbenzylthioester (Common name: Thiobencarb),

b7) 3,7-Dichlorchinolin-8-carbonsäure (Common name: Quinclorac);

b8) N-(Butoxymethyl)-2-chlor-N-(2,6-diethylphenyl)-acetamid (Common name: Butachlor),
(Z)-N-But-2-enyloxymethyl-2-chlor-2',6'-diethylacetanilid (Common name: Butenachlor),

N-(2-Propoxyethyl)-2-chlor-N-(2,6-diethylphenyl)acetamid (Common name: Pretilachlor),
α-Chlor-N-(3-methoxy-2-thienyl)-methyl-2',6'-dimethylacetanilid (Common name: Thenylchlor);

b11) 2-[4-(6-Chlorbenzoxazol-2-yloxy)-phenoxy]-propionsäureethylester (Common name: Fenoxapropethyl);

b12) 2-[4-(2,4-Dichlor-m-toluyl)-1,3-dimethylpyrazol-5-yloxy]-4'-methylacetophenon (Common name: Benzofenap),
2-[4-(2,4-Dichlorbenzoyl)-1,3-dimethyl-pyrazol-5-yloxy]-acetophenon (Common name: Pyrazoxyfen);

b13) 3,5-Bis(methylthio-carbonyl)-2-difluormethyl-4-(2-methylpropyl)-6-trifluormethyl-pyridin (Common name: Dithiopyr);

b15) 1-(4,6-Dimethoxypyrimidin-2-yl)-3-[1-methyl-4-(2-methyl-2H-tetrazol-5-yl)pyrazol-5-ylsulfonyl]-harnstoff (Common name: Azimsulfuron),
α-(4,6-Dimethoxypyrimidin-2-yl-carbamoyl-sulfamoyl)-Otoluolsäure-methylester (Common name: Bensulfuronmethyl), 1-(4,6-Dimethoxy-1,3,5-triazin-2-yl)-3-[2-(2-methoxyethoxy)-phenylsulfonyl]-harnstoff (Common name: Cinosulfuron), 1-([2-(Cyclopropylcarbonyl)phenyl]aminosulfonyl}-3-(4,6-dimethoxypyrimidin-2-yl)-harnstoff (Common name: Cyclosulfamuron), N-(2-Chlorimidazo[1,2-a]-pyridin-3-yl-sulfonyl)-N'-(4,6-dimethoxy-2-pyrimidyl)-harnstoff (Common name: Imazosulfuron),
5-(4,6-Dimethoxypyrimidin-2-yl-carbamoylsulfamoyl)-1-methylpyrazol-4-carbonsäureethylester (Common name: Pyrazosulfuron-ethyl),

b16) $N^2$-(1,2-Dimethylpropyl)-$N^4$-ethyl-6-methylthio-1,3,5-triazin-2,4-diamin (Common name: Dimethametryn),
Bis(ethylamino)-6-methylthio-1,3,5-triazin (Common name: Simetryn, Simetryne);

b19) (1RS,2SR,4SR)-1,4-Epoxy-p-menth-2-yl-2-methylbenzylether (Common name: Cinmethylin);

b20) S-2-Methylpiperidinocarbonylmethyl-O,O-dipropylphosphorodithioat (Common name: Piperophos).

**3.** Herbizides Mittel, enthaltend mindestens einen flüssigen und/oder festen Trägerstoff, gewünschtenfalls mindestens einen oberflächenaktiven Stoff, sowie

a) eine herbizid wirksame Menge mindestens eines Cyclohexenonoximethers der Formel I gemäß Anspruch 1 und

b) eine synergistison wirksame Menge mindestens einer herbiziden Verbindung aus der Gruppe b) gemäß den Ansprüchen 1 bis 2.

**4.** Herbizide Mischung nach den Ansprüchen 1 bis 2, enthaltend mindestens einen Cyclohexenonoximether der Formel I und mindestens ein Herbizid aus der Gruppe b) im Gewichtsverhältnis 1 : 0,1 bis 1 : 40.

**5.** Herbizide Mischung nach den Ansprüchen 1 bis 2, enthaltend mindestens einen Cyclohexenonoximether der Formel I und mindestens ein Herbizid aus der Gruppe b) im Gewichtsverhältnis 1 : 0,2 bis 1 : 30.

**6.** Herbizides Mittel nach Anspruch 3, enthaltend mindestens einen Cyclohexenonoximether der Formel I und mindestens ein Herbizid aus der Gruppe b) im Gewichtsverhältnis 1 : 0,1 bis 1 : 40.

**7.** Herbizides Mittel nach Anspruch 3, enthaltend mindestens einen Cyclohexenonoximether der Formel I und mindestens ein Herbizid aus der Gruppe b) im Gewichtsverhältnis 1 : 0,2 bis 1 : 30.

**8.** Verfahren zur Herstellung von herbizid wirksamen Mitteln, **dadurch gekennzeichnet, daß** man

a) eine herbizid wirksame Menge mindestens eines Cyclohexenonoximethers der Formel I gemäß Anspruch 1 und

b) eine synergistisch wirksame Menge mindestens einer herbiziden Verbindung aus der Gruppe b) gemäß den Ansprüchen 1 oder 2

mit mindestens einem inerten flüssigen und/oder festen Trägerstoff sowie gewünschtenfalls mit mindestens einem oberflächenaktiven Stoff mischt.

**9.** Verfahren zur Bekämpfung von unerwünschtem Pflanzenwuchs, **dadurch gekennzeichnet, daß** man

a) eine herbizid wirksame Menge mindestens eines Cyclohexenonoximethers der Formel I gemäß Anspruch 1 und

b) eine synergistisch wirksame Menge mindestens einer herbiziden Verbindung aus der Gruppe b) gemäß den Ansprüchen 1 oder 2

vor oder während des Auflaufens der unerwünschten Pflanzen gleichzeitig oder nacheinander ausbringt.

**10.** Verfahren zur selektiven Bekämpfung von unerwünschtem Pflanzenwuchs, **dadurch gekennzeichnet, daß** man die Blätter der Kulturpflanzen und der unerwünschten Pflanzen im Nachauflaufverfahren mit

a) einer herbizid wirksame Menge mindestens eines Cyclohexenonoximethers der Formel I gemäß Anspruch 1 und

b) einer synergistisch wirksamen Menge mindestens einer herbiziden Verbindung aus der Gruppe b) gemäß den Ansprüchen 1 oder 2

gleichzeitig oder nacheinander behandelt.

**11.** Verfahren gemäß Anspruch 10, **dadurch gekennzeichnet, daß** die Kulturpflanzen Reis, Weizen, Mais, Gerste oder Hirse sind.

## Claims

**1.** A herbicidal mixture, containing

a) at least one cyclohexenone oxime ether of the formula I

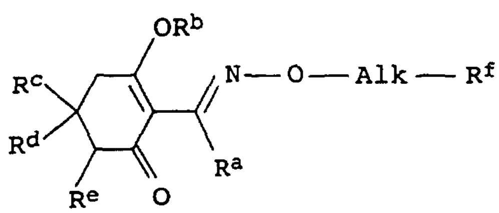

(I),

where the variables have the following meanings:

| | |
|---|---|
| $R^a$ | is ethyl or n-propyl; |
| $R^b$, $R^d$ and $R^e$ | are each hydrogen; |
| $R^c$ | is tetrahydropyran-3-yl, tetrahydropyran-4-yl or tetrahydrothiopyran-3-yl; |
| Alk | is a chain $-CH_2CH_2-O-$ or $-CH_2CH(CH_3)-O-$; |
| $R^f$ | is 4-fluorophenyl or 4-chlorophenyl. |

and

b) at least one of the following 44 herbicidal compounds from the groups b1) to b20)

b1) the amides
2-bromo-3,3-dimethyl-N-(1-methyl-l-phenylethyl)-butyramide (common name: bromobutide),
S-(1-methyl-1-phenylethyl) 1-piperidinecarbothioate (common name: dimepiperate),
4-ethoxybenz-2',3'-dihydrochloroanilide (common name: etobenzanid) and
N-(3,4-dichlorophenyl)propanamide (common name: propanil);

b2) the anilides
S-[2-[(4-chlorophenyl)(1-methylethyl)amino]-2-oxo-ethyl] O,O-dimethyl phosphorodithioate (common name: anilofos) and
2-(1,3-benzothiazol-2-yloxy)-N-methylacetanilide (common name: mefenacet);

b3) the aryloxyalkanecarboxylic acids
(2,4-dichlorophenoxy)acetic acid (common name: 2,4-D),
4-(4-chloro-2-methylphenoxy)butanecarboxylic acid (common name: MCPB) and
2-(2-naphthyloxy)propionanilide (common name: napro-anilide);

b4) 3-isopropyl-lH-2,1,3-benzothiadiazin-4-(3H)one 2,2-dioxide (common name: bentazone);

b5) the bleachers
4-(2,4-dichlorobenzoyl)-1,3-dimethylpyrazol-5-yl-toluene-4-sulfonate (common name: pyrazolynate, pyrazolate) and 2-(2-chloro-4-mesylbenzoyl)-cyclohexane-1,3-dione (common name: sulcotrione);

b6) the carbamates
S-benzyl 1,2-dimethylpropyl(ethyl)thiocarbamate (common name: esprocarb),
N-(ethylthiocarbonyl)azepane (common name: molinate),
O-3-tert-butylphenyl 6-methoxy-2-pyridyl(methyl)thio-carbamate (common name: pyributicarb) and
4-chlorobenzyl N,N-diethylthiocarbamate (common name: thiobencarb, benthiocarb);

b7) 3,7-dichloroquinoline-8-carboxylic acid (common name: quinclorac);

b8) the chloroacetanilides
N-(butoxymethyl)-2-chloro-N-(2,6-diethylphenyl)-acetamide (common name: butachlor),
(Z)-N-but-2-enyloxymethyl-2-chloro-2',6'-diethyl-acetanilide (common name: butenachlor),
N-(2-propoxyethyl)-2-chloro-N-(2,6-diethylphenyl)-acetamide (common name: pretilachlor) and
$\alpha$-chloro-N-(3-methoxy-2-thienyl)methyl-2',6'-dimethylacetanilide (common name: thenylchlor);

b9) the cyclohexenones
2-[1-(ethoxyimino)butyl]-3-hydroxy-5-(tetrahydrothio-pyran-3-yl)-2-cyclohexen-1-one (common name: cycloxy-dim) and
(E/Z)-2-[1-(ethoxyimino)butyl]-5-[2-(ethylthio)-propyl]-3-hydroxycyclohex-2-enone (common name: sethoxydim);

b10) N-(1-ethylpropyl)-3,4-dimethyl-2,6-dinitrobenzen-amine (Common name: pendimethalin);

b11) the phenoxyphenoxypropionic acid esters
n-butyl (R)-2-[4-(4-cyano-2-fluorophenoxy)phenoxy] propionate (common name: cyhalofop-butyl) and
ethyl 2-[4-(6-chlorobenzoxazol-2-yloxy)phenoxy]-propionate (common name: fenoxaprop-ethyl);

b12) the protoporphyrinogen IX oxidase inhibitors
2-[4-(2,4-dichloro-m-toluyl)-1,3-dimethyl-pyrazol-5-yloxy]-4'-methylacetophenone (common name: benzofenap) and
2-[4-(2,4-dichlorobenzoyl)-1,3-dimethylpyra-zol-5-yloxy]acetophenone (common name: pyrazoxyfen);

b13) 3,5-bis(methylthiocarbonyl)-2-difluoromethyl-4-(2-methylpropyl)-6-trifluoromethylpyridine (common name: dithiopyr);

b14) the pyrimidyl ethers
sodium 2,6-bis[(4,6-dimethoxypyrimidin-2-yl)oxy]-benzoate and

methyl 2-[(4,6-dimethoxypyrimidin-2-yl)oxy]-6-[1-(methoxyimino)ethyl]benzoate;

b15) the sulfonylureas
1-(4,6-dimethoxypyrimidin-2-yl)-3-[1-methyl-4-(2-methyl-2H-tetrazol-5-yl)pyrazol-5-ylsulfonyl]urea (common name: azimsulfuron), methyl α-(4,6-dimethoxypyrimidin-2-ylcarbamoylsulfa-moyl)-O-toluate (common name: bensulfuron-methyl),
1-(4,6-dimethoxy-1,3,5-triazin-2-yl)-3-[2-(2-methoxyethoxy)phenylsulfonyl]urea (common name: cinosulfuron),
1-{[2-(cyclopropylcarbonyl)phenyl]aminosulfonyl}-3-(4,6-dimethoxypyrimidin-2-yl)urea (common name: cyclosulfamuron),
[[(4,6-dimethoxy-2-pyrimidinyl)amino]carbonyl]-2-ethoxyphenyl sulfamic acid ester (Common name: ethoxysulfuron),
N-(2-chloroimidazo[1,2-a]pyridin-3-ylsulfonyl)-N'-(4,6-dimethoxy-2-pyrimidyl)urea (common name: imazo-sulfuron) and
ethyl 5-(4,6-dimethoxypyrimidin-2-ylcarbamoylsulfamoyl)-1-methylpyrazole-4-carboxylate (common name: pyrazosulfuron-ethyl);

b16) the triazines
$N^2$-(1,2-dimethylpropyl)-$N^4$-ethyl-6-methylthio-1,3,5-triazine-2,4-diamine (common name: dimethametryn) and
bis(ethylamino)-6-methylthio-1,3,5-triazine (common name: simetryn, simetryne);

b17) 2,3-dihydro-3,3-dimethyl-5-benzofuranyl ethanesulfonate (common name: benfuresate);

b18) l-diethylcarbamoyl-3-(2,4,6-trimethylphenylsulfonyl)-1,2,4-triazole (common name: cafenstrole);

b19) (1RS,2SR,4SR)-1,4-epoxy-p-menth-2-yl 2-methylbenzyl ether (common name: cinmethylin), and

b20) S-2-methylpiperidinocarbonylmethyl O,O-dipropyl phosphorodithioate (common name: piperophos).

**2.** A herbicidal mixture as claimed in claim 1, containing as component b) at least one of the following 33 herbicides:

b1) 2-bromo-3,3-dimethyl-N-(1-methyl-1-phenylethyl)-butyramide (common name: bromobutide),
S-(1-methyl-1-phenylethyl) 1-piperidinecarbothioate (common name: dimepiperate),
4-ethoxybenz-2',3'-dihydrochloroanilide (common name: etobenzanid) and
N-(3,4-dichlorophenyl)propanamide (common name: propanil);

b2) 2-(1,3-benzothiazol-2-yloxy)-N-methylacetanilide, (common name: mefenacet);

b3) (2,4-dichlorophenoxy)acetic acid (common name: 2,4-D), 4-(4-chloro-2-methylphenoxy)butanecarboxylic acid (common name: MCPB) and
2-(2-naphthyloxy)propionanilide (common name: naproanilide);

b4) 3-isopropyl-lH-2,1,3-benzothiadiazin-4-(3H)one 2,2-dioxide (common name: bentazone);

b5) 4-(2,4-dichlorobenzoyl)-1,3-dimethylpyrazol-5-yl-toluene-4-sulfonate (common name: pyrazolynate, pyrazolate) and 2-(2-chloro-4-mesylbenzoyl)-cyclohexane-1,3-dione (common name: sulcotrione);

b6) S-benzyl 1,2-dimethylpropyl(ethyl)thiocarbamate (common name: esprocarb),
N-(ethylthiocarbonyl)azepane (common name: molinate), 4-chlorobenzyl N,N-diethylthiocarbamate (common name: thiobencarb);

b7) 3,7-dichloroquinoline-8-carboxylic acid (common name: quinclorac);

b8) N-(butoxymethyl)-2-chloro-N-(2,6-diethylphenyl)-acetamide (common name: butachlor),
(Z)-N-but-2-enyloxymethyl-2-chloro-2',6'-diethyl-acetanilide (common name: butenachlor), N-(2-propoxyethyl)-2-chloro-N-(2,6-diethylphenyl)-acetamide (common name: pretilachlor) and
a-chloro-N-(3-methoxy-2-thienyl)methyl-2',6'-dimethylacetanilide (common name: thenylchlor);

b11) ethyl 2-[4-(6-chlorobenzoxazol-2-yloxy)phenoxy]-propionate (common name: fenoxaprop-ethyl);

b12) 2-[4-(2,4-dichloro-m-toluyl)-1,3-dimethyl-pyrazol-5-yloxy]-4'-methylacetophenone (common name: benzofenap) and
2-[4-(2,4-dichlorobenzoyl)-1,3-dimethylpyrazol-5-yloxy]acetophenone (common name: pyrazoxyfen);

b13) 3,5-bis(methylthiocarbonyl)-2-difluoromethyl-4-(2-methylpropyl)-6-trifluoromethylpyridine (common name: dithiopyr);

b15) 1-(4,6-dimethoxypyrimidin-2-yl)-3-[1-methyl-4-(2-methyl-2H-tetrazol-5-yl)pyrazol-5-ylsulfonyl]urea (common name: azimsulfuron),
methyl $\alpha$-(4,6-dimethoxypyrimidin-2-ylcarbamoylsulfamoyl)-O-toluate (common name: bensulfuron-methyl),
1-(4,6-dimethoxy-1,3,5-triazin-2-yl)-3-[2-(2-methoxyethoxy)phenylsulfonyl]urea (common name: cino-sulfuron),
1-{[2-(cyclopropylcarbonyl)phenyl]aminosulfonyl}-3-(4,6-dimethoxypyrimidin-2-yl)urea (common name: cyclosulfamuron),
N-(2-chloroimidazo[1,2-a]pyridin-3-ylsulfonyl)-N'-(4,6-dimethoxy-2-pyrimidyl)urea (common name: imazosulfuron) and
ethyl 5-(4,6-dimethoxypyrimidin-2-ylcarbamoylsulfamoyl)-1-methylpyrazole-4-carboxylate (common name: pyrazosulfuron-ethyl);

b16) $N^2$-(1,2-dimethylpropyl)-$N^4$-ethyl-6-methylthio-1,3,5-triazine-2,4-diamine (common name: dimethametryn)and
bis(ethylamino)-6-methylthio-1,3,5-triazine (common name: simetryn, simetryne);

b19) (1RS,2SR,4SR)-1,4-epoxy-p-menth-2-yl 2-methylbenzyl ether (common name: cinmethylin), and

b20) S-2-methylpiperidinocarbonylmethyl O,O-dipropyl phosphorodithioate (common name: piperophos).

**3.** A herbicidal composition containing at least one liquid and/or solid carrier, if desired at least one surface-active substance, and

a) a herbicidally active amount of at least one cyclohexenone oxime ether of the formula I as claimed in claim 1 and

b) a synergistically active amount of at least one herbicidal compound from group b) as claimed in claim 1 or 2.

**4.** A herbicidal mixture as claimed in claim 1 or 2, containing at least one cyclohexenone oxime ether of the formula I and at least one herbicide from group b) in the weight ratio from 1:0.1 to 1:40.

**5.** A herbicidal mixture as claimed in claim 1 or 2, containing at least one cyclohexenone oxime ether of the formula I and at least one herbicide from group b) in the weight ratio from 1:0.2 to 1:30.

**6.** A herbicidal mixture as claimed in claim 3, containing at least one cyclohexenone oxime ether of the formula I and at least one herbicide from group b) in the weight ratio from 1:0.1 to 1:40.

**7.** A herbicidal mixture as claimed in claim 3, containing at least one cyclohexenone oxime ether of the formula I and at least one herbicide from group b) in the weight ratio from 1:0.2 to 1:30.

**8.** A process for preparing herbicidally active compositions, which comprises mixing

a) a herbicidally active amount of at least one cyclohexenone oxime ether of the formula I as claimed in claim 1 and

b) a synergistically active amount of at least one herbicidal compound from group b) as claimed in claim 1 or 2

with at least one inert liquid and/or solid carrier and, if desired, with at least one surface-active substance.

**9.** A method of controlling undesired vegetation, which comprises applying

a) a herbicidally active amount of at least one cyclohexenone oxime ether of the formula I as claimed in claim 1 and

b) a synergistically active amount of at least one herbicidal compound from group b) as claimed in claim 1 or 2

simultaneously or in succession before or during the emergence of the undesired plants.

**10.** A method of selectively controlling undesired vegetation, which comprises treating the leaves of the crop plants and of the undesired plants post-emergence with

a) a herbicidally active amount of at least one cyclohexenone oxime ether of the formula I as claimed in claim 1 and

b) a synergistically active amount of at least one herbicidal compound from group b) as claimed in claim 1 or 2.

**11.** A method as claimed in claim 10, wherein the crop plants are rice, wheat, corn, barley or millet.

**Revendications**

**1.** Mélange herbicide contenant:

a) au moins un éther d'oxime de cyclohexénone de formule I

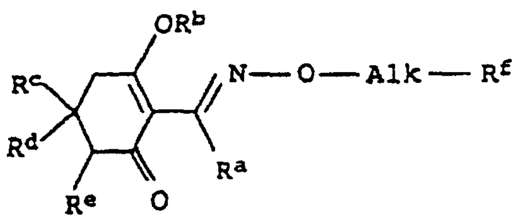

(I),

dans lequel les variables représentent :

$R^a$ un groupe éthyle ou un groupe n-propyle ;
$R^b$, $R^d$ et $R^e$ représentent chacun un atome d'hydrogène ;
$R^c$ un groupe tétrahydropyran-3-yle, un groupe tétrahydropyran-4-yle ou un groupe tétrahydrothiopyran-3-yle ;
Alk une chaîne $-CH_2CH_2(CH_3)-O-O$ ;
$R^f$ un groupe 4-fluorophényle ou un groupe 4-chlorophényle

et

b) au moins un des 44 composés herbicides suivants des groupes b1 à b20,

b1) les amides
2-bromo-3,3-diméthyl-N-(1-méthyl-1-phényléthyl)-butyramide (Common name: Bromobutide),
S-(1-méthyl-1-phényléthyl)-1-pipéridinecarbothioate (Common name: Dimepiperate),
4-éthoxybenzo-2',3'-dihydrochloroanilide (Common name: Ethobenzanid) et
N-(3,4-dichlorophényl)-propanamide (Common name: Propanil);

b2) les anilides
S-[2-[4(chlorophényl)-(1-méthyléthyl)amino]-2-oxoéthyl]-O,O-diméthylphosphordithioate (Common name: Anilofos) et
2-(1,3-benzothiazol-2-yloxy)-N-méthyl-acétanilide (Common name: Mefenacet);

b3) les acides aryloxyalcanecarboxyliques
acide (2,4-dichlorophénoxy)acétique (Common name: 2,4-D), acide 4-(4-chloro-2-méthylphénoxy)butanecarboxylique (Common name: MCPB) et
2-(2-naphthyloxy)-propionanilide (Common name: Napro-anilide)

b4) 3-isopropyl-1H-2,1,3-benzothiadiazine-4-(3H)one-2,2-dioxyde (Common name: Bentazon);

b5) les blanchissants
4-(2,4-dichlorobenzoyle)-1,3-diméthyl-pyrazole-5-yl-toluyl-4-sulfonate (Common name: Pyrzolynate, Pyrazolate) et 2-(2-chloro-4-mésylbenzoyl)-cyclohexane-1,3-dione (Common Name : Sulcotrione);

b6) les carbamates
S-benzyl-1,2-diméthylpropyl(éthyl)-thiocarbamate (Common name: Esprocarb),
N-(éthylthio-carbonyl)-azépane (Common name: Molinate),O-3-tert.-butylphényl-6-méthoxy-2-pyridyl (méthyl)thiocarbamate (Common name: Pyributicarb) et
4-chlorobenzylthioester de l'acide N,N-diéthylcarbamique (Common name: Thiobencarb, Benthiocarb);

b7) acide 3,7-dichloroquinoléine-8-carboxylique (Common name: Quinclorac);

b8) les chloroacétanilides
N-(butoxyméthyl)-2-chloro-N-(2,6-diéthylphényle)-acétamide (Common name: Butachlor),
(Z)-N-but-2-ényloxyméthyl-2-chloro-2',6'-diéthylacétanilide (Common name: Butenachlor),
N-(2-propoxyéthyl)-2-chloro-N-(2,6-diéthylphényl)acétamide (Common name: Pretilachlor) et
a-chloro-N-(3-méthoxy-2-thiényl)-méthyl-2',6'-diméthylacétanilide (Common name : Thenylchlor);

b9) les cyclohexénones
2-[1-(éthoxyimino)-butyl]-3-hydroxy-5-(tétrahydrothiopyran-3-yl)-2-cyclohexène-1-one (Common name: Cycloydim) et
(E/Z)-2[1-(éthoxyimino)butyl]-5-[2-éthylthio)-propyl]-3-hydroxy-cyclohex-3-ènone (Common name: Sethoxydim);

b10) N-(1-éthylpropyl)-3,4-diméthyl-2,6-dinitrobenzolamine (Common name: Pendimethalin) ;

b11) les esters de l'acide propionique phénoxy phénoxy acide (R)-2[4-(4-cyano-2-fluorophénoxy)phénoxy]-propionique-n-butylester (Common name: Cyhalofop-butyl) et acide 2-[4-(6-chlorobenzoxazol-2-yloxy)-phénoxy]-propionique éthylester (Common name: Fenoxaprop-ethyl);

b12) les inhibiteurs de l'oxydase IX protoporphyrinogène 2-[4-(2,4-dichloro-m-toluyl)-1,3-diméthylpyrazol-5-yl-oxyl]-4'-méthylacétophénone (Common name: Benzofenap) et 2-[4-(2,4-dichlorobenzoyle)-1,3-diméthyl-pyrazol-5-yl-oxy]-acétophénone (Common name: Pyrazoxyfen);

b13) 3,5-bis (méthylthio-carbonyl)-2-difluorométhyl-4-(2-méthylpropyl)-6-trifluorométhyl-pyridine (Common name: Dithiopyr);

b14) les éthers de pyrimidine
sel de sodium de l'acide benzoïque 2,6-bis [(4,6-diméthoxypyrimidine-2-yl) oxy) et
méthylester de l'acide benzoïque 2-[(4,6-diméthoxypyrimidine-2-yl) oxy)-6-(1-(méthoxy-imino)éthyl];

b15) les sulfonylurées
1-[4,6-diméthoxypyrimidine-2-yl)-3-[1-méthyl-4-(2-méthyl-2H-tétrazol-5-yl) pyrazol-5-ylsulfonyl] urée (Common name: Azimsulfuron),
ester métylique de l'acide $\alpha$-(4,6-diméthoxypirimidine-2-yl-carbamyl-sulfamyl)-O- toluénique (Common name: Bensulfuronmethyl);
1-(4,6-diméthoxy-1,3,5-(triazine-2-yl)-3-[2-(2-méthoxy-éthoxy)-phénylsulfonyl]-urée (Common name: Cinosulfuron), 1-{[2(cyclopropylcarbonyl) phényl]aminosulfonyl}-3-(4,6 diméthoxypyrimidine-2-yl)-urée (Common name: Cyclosulfamuron),
N-(2-chloroimidazo[1,2-a]pyridine-3-yl-sulfonyl)-N'-(4,6-diméthoxy-2-pyrimidyl)-urée (Common name: Imazosulfuron) et ester éthylique de l'acide 5-(4,6-diméthoxypyrimidine-2-yl-carbamoylsulfamoyl)-1-méthylpyrazol-4-carboxylique (Common name: Pyrazosulfuron-ethyl) ;

b16) les triazines
$N^2$-(1,2-diméthylpropyl)-$N^4$-éthyl-6-méthylthio-1,3,5-triazine-2,4-diamine (Common name: dimethametryn) et bis (éthylamino)-6-méthylthio-1,3,5-triazine (Common name: Simetryn, Simetryne);

b17) 2,3-dihydro-3,3-diméthyl-5-benzofuranyl-éthane sulfonate (Common name: Benfuresate);

b18) 1-diéthylcarbamoyl-3-(2,4,6-triméthylphénylsulfonyl)-1,2,4-triazol (Common name: Cafenstrole);

b19) (1 RS,2SR,4SR)-1,4-époxy-p-menth-2-yl-2-méthylbenzyléther (Common name: Cinmethylin) et

b20) S-2-méthylpiperidinocarbonylméthyl-O,O-dipropyl-phosphorodithioate (Common name: Piperophos)

**2.** Mélange herbicide selon la revendication 1, contenant comme composant b) au moins un des 33 herbicides suivants :

b1) 2-bromo-3,3-diméthyl-N-(1-méthyl-1-phényléthyl)-butyramide (Common name: Bromobutide), S-(1-méthyl-1-phényléthyl)-1-piperidinecarbothioate (Common name: Dimepiperate),
4-éthoxybenzo-2',3'-dihydrochloroanilide (Common name: Ethobenzanid),
N-(3,4-dichlorophényl)-propanamide (Common name: Propanyle) ;

b2) 2-(1,3-benzothiazol-2-yloxy)-N-méthyl-acétanilide (Common name : Mefenacet);

b3) acide (2,4-dichlorophénoxy) acétique Common name: 2,4-D), acide 4-(4-chloro-2-méthylphénoxy)butanecarboxylique (Common name: MCPB), 2-(2-naphthyloxy)-propionanilide (Common name: Naproanilide);

b4) 3-isopropyl-1H-2,1,3-benzothiadiazine-4-(3H) one-2,2-dioxyde (Common name: Bentazone);

b5) 4-(2,4-dichlorobenzoyl)-1,3-diméthyl-pyrazol-5-yl-toluyl-4-sulphonate (Common name: Pyrozolynate, Pyrazolate), 2-(2-chloro-4-mésylbenzoyl)-cyclohexane-1,3-dione (Common name : Sulcotrione);

b6) S-benzyl-1,2-diméthylpropyl (éthyl)-thiocarbamate (Common name: Esprocarb),
N-(éthylthiocarbonyl)-azépane (Common name: Molinate),
4-chlorobenzylthioester de l'acide N,N-diéthyl-carbamique-(Common name: Thiobencarb);

b7) acide 3,7-dichloroquinoléine-8-carboxylique (Common name: Quinclorac);

b8) N-(butoxyméthyl)-2-chloro-N-(2,6-diéthylphényl)-acétamide (Common name: Butachlor),
(Z)-N-but-2-ényloxyméthyl-2-chloro-2',6'-diéthylacétanilide (Common name: Butenachlor),
N-(2-propoxyéthyl)-2-chloro-N-(2,6-diéthylphényl) acétamide (Common name: Pretilachlor)
a-chloro-N-(3-méthoxy-2-thiényl)-méthyl-2',6'-diméthylacétanilide (Common name: Thenylchlor);

b11) ester éthylique de l'acide 2-[4-(6-chlorobenzoxazol-2-yloxy)-phénoxyl]-propionique (Common name: Fenoxapropéthyl);

b12) 2-[4-(2,4-dichloro-m-toluyl)-1,3-dlméthylpyrazol-5-yl-oxy]-4'-méthylacétophénone (Common name: Benzofenap), 2-[4-(2,4-dichlorobenzoyl)-1,3-diméthyl-pyrazol-5-yl-oxy]-acétophénone (Common name: Pyrazoxyfen);

b13) 3,5-bis (méthylthio-carbonyl)-2-difluorométhyl-4-(2-méthylpropyl)-6-trifluorométhyl-pyridine (Common name: Dithiopyr) ;

b15) 1-[4,6-diméthoxypyrimidine-2-yl)-3-[1-méthyl-4-(2-méthyl-2H-tétrazol-5-yl) pyrazol-5-ylsulfonyl]urée (Common name: Azimsulfuron),
ester méthylique de l'acide α-(4,6-diméthoxypirimidine-2-yl-carbamoyl-sulfampyl)-O- toluénique (Common name: Bensulfuronmethyl);

1-(4,6-diméthoxy-1,3,5-triazine-2-yl)-3-[2-(2-méthoxy-éthoxy)-phénylsulfonyl]-urée (Common name: Cinosulfurone), 1-{[2-(cyclopropylcarbonyl)péhnyl]aminosulfonyl}-3-(4,6-diméthoxypirimidine-2-yl)-urée (Common name: Cyclosulfamuron), N-(2-chlorimidazo[1,2-a]pyridine-3-yl-sulfonyl)-N'-(4,6-diméthoxy-2-pyrimidyl)-urée (Common name: Imazosulfuron), ester éthylique de l'acide 5-(4,6-diméthoxypyrimidine-2-yl-carbamoylsulfamoyl)-1-méthylpyrazol-4-carboxylique (Common name: Pyrazosulfuron-ethyl);

b16) $N^2$-(1,2-diméthylpropyl)-$N^4$-éthyl-6-méthylthio-1,3,5-triazine-2,4-diamine (Common name: Dimethametryn) bis(éthylamino)-6-méthylthio-1,3,5-triazine (Common name: Simetryn, Simetryne);

b19) (1RS,2SR,4SR)-1,4-époxy-p-menth-2-yl-2-méthylbenzyléther (Common name: Cinmethylin) ;

b20) S-2-méthylpiperidinocarbonylméthyl-O,O-dipropyl-phosphorodithioate (Common name: Piperophos).

**3.** Produit herbicide contenant au moins un excipient liquide et/ou solide, facultativement au moins un agent tensioactif, et :

a) une quantité d'herbicide active d'au moins un cyclohexénoneoximeéther de cyclohexénone de Formule I selon la revendication 1 et
b) une quantité à activité synergique d'au moins un composé herbicide du groupe b) selon les revendications 1 à 2.

**4.** Mélange herbicide selon les revendications 1 à 2, contenant au moins un cyclohexénoneoximeéther de Formule I et au moins un herbicide du groupe b) dans un rapport pondéral 1 :0,1 à 1 :40.

**5.** Mélange herbicide selon les revendications 1 à 2, contenant au moins un cyclohexénoneoximeéther de Formule I et au moins un herbicide du groupe b) dans un rapport pondéral 1 :0,2 à 1 :30.

**6.** Produit herbicide selon la revendication 3, contenant au moins un cyclohexénoneoximeéther de Formule I et au moins un herbicide du groupe b) dans un rapport pondéral 1 :0,1 à 1 :40.

**7.** Produit herbicide selon larevendications 3 contenant au moins un cyclohexénoneoximeéther de Formule I et au moins un herbicide du groupe b) dans un rapport pondéral 1 :0,2 à 1 :30.

**8.** Procédé de fabrication de produit à action herbicides **caractérisés en ce que**:

a) on mélange une quantité à action herbicide d'au moins un cyclohexénoneoximeéther de Formule I selon la revendication 1 et

b) une quantité à action synergique d'au moins un composé herbicide du groupe b) selon les revendications 1 ou 2 avec au moins un excipient inerte liquide et/ou solide et, facultativement, avec au moins un agent tensioactif.

**9.** Procédé de lutte contre la végétation indésirable **caractérisé en ce que** :

a) l'on applique simultanément ou successivement une quantité herbicide d'au moins un cyclohexénoneoximeéther de Formule I selon la revendication 1 et

b) une quantité à action synergique d'au moins un composé herbicide du groupe b) selon les revendications 1 ou 2, avant ou pendant la levée des plantes indésirables.

**10.** Procédé de lutte sélective contre la végétation indésirable, **caractérisé en ce que** l'on traite simultanément ou successivement les feuilles des plantes de culture et des plantes indésirables durant la post-levée avec :

a) une quantité à action herbicide d'au moins un cyclohexénoneoximeéther de Formule I selon la revendication 1 et

b) une quantité à action synergique d'au moins un composé herbicide du groupe b) selon les revendications 1 ou 2.

**11.** Procédé selon la revendication 10, **caractérisé en ce que** les plantes de culture sont du riz, du blé, du maïs, de l'orge ou du millet.